# EUROPÄISCHE PATENTANMELDUNG

(11) **EP 0 837 254 A1**
(43) Veröffentlichungstag der Anmeldung: **22.04.1998**
(21) Anmeldenummer: 97118247.2
(22) Anmeldetag: 21.10.1997
(51) Int. Cl.: F16B 13/08

(54) **Hohlraumanker**

(30) Priorität: 21.10.1996 DE 29618192 U
(71) Anmelder: friedola Gebr. Holzapfel GmbH & Co. KG, 37276 Meinhard-Frieda (DE)
(72) Erfinder: Henning, Wolfgang, 37269 Eschwege (DE)
(74) Vertreter: Schwabe - Sandmair - Marx

(57) **Zusammenfassung**

Ein Hohlraumanker mit einem an einer Zugstange verschwenkbar gelagerten Querriegel (2), der in einer parallel zur Zugstange (1) ausgerichteten Einführstellung mit der Zugstange (1) durch eine Bohrung in einer Wandung in einen hinter der Wandung befindlichen Hohlraum einführbar ist und der in einer Ankerstellung, welche er in dem Hohlraum einnimmt, quer zu der Zugstange ausgerichtet ist und diese an der Wandung verankert, und mit einem an der Zugstange geführten Gegenlager (3) für den Querriegel (2), das relativ zu der Zugstange auf die Wandung und den dahinter befindlichen Querriegel (2) beaufschlagbar ist, zeichnet sich dadurch aus, daß die Zugstange (1), der Querriegel (2) und das Gegenlager (3) als Spritzgußteile aus Kunststoff ausgebildet sind und daß an der Zugstange (1) eine Reihe von zu dem Querriegel (2) hin geneigten Rastzähnen (8) ausgebildet ist, in die eine an dem Gegenlager ausgebildete elastische Rastzunge (7) eingreift, wobei sich das auf den Querriegel beaufschlagte Gegenlager über die Rastzunge (7) an einem der Rastzähne (8) abstützt.

## Beschreibung

Die Erfindung betrifft eine Hohlraumanker mit einem an einer Zugstange verschwenkbar gelagerten Querriegel, der in einer parallel zur Zugstange ausgerichteten Einführstellung mit der Zugstange durch eine Bohrung in einer Wandung in einen hinter der Wandung befindlichen Hohlraum einführbar ist und der in einer Ankerstellung, welche er in dem Hohlraum einnimmt, quer zu der Zugstange ausgerichtet ist und diese an der Wandung verankert, und mit einem an der Zugstange geführten Gegenlager für den Querriegel, das relativ zu der Zugstange auf die Wandung und den dahinter befindlichen Querriegel beaufschlagbar ist.

Ein Hohlraumanker der eingangs beschriebenen Art ist bekannt. Er ist aus Metall ausgebildet. Die Zugstange besteht aus einer Gewindestange. Auf die Gewindestange ist einerseits ein Lagerelement aufgeschraubt, das eine durchgängige Gewindebohrung aufweist und zur schwenkbaren Lagerung des Querriegels dient.

Andererseits ist auf die Zugstange eine Hutmutter aufgeschraubt, die als Gegenlager für den Querriegel dient. Durch Hindurchschrauben der Gewindestange durch das Lagerelement wird die Hutmutter auf den Querriegel hin beaufschlagt. Der Querriegel ist zwischen seinen beiden Stellungen frei verschwenkbar an dem Lagerteil gelagert. Er weist jedoch eine asymmetrische Masseverteilung um seine Schwenkachse auf, so daß er seine Ankerstellung bei waagerecht gehaltener Zugstange durch Einwirkung der Schwerkraft automatisch einnimmt.

Es sind aber auch Hohlraumanker aus Metall bekannt, bei denen der Querriegel zweiteilig ausgebildet ist, wobei die beiden Teile des Querriegels durch eine Feder aus ihrer Einführstellung in ihre Ankerstellung auseinander gedrückt werden. Auch hier ist ein Lagerelement vorgesehen, durch das die als Gewindestange ausgebildote Zugstange zur Beaufschlagung des Gegenlagers hindurchzuschrauben ist. Statt einer Hutmutter als Gegenlager kann auch irgendein anderes radial von der Zugstange auskragendes Bauteil vorgesehen sein.

Der Erfindung liegt die Aufgabe zugrunde, einen Hohlraumanker der eingangs beschriebenen Art aufzuzeigen, der kostengünstig herstellbar und besonders schnell montierbar ist.

Erfindungsgemäß wird diese Aufgabe dadurch gelöst, daß die Zugstange, der Querriegel und das Gegenlager als Spritzgußteile aus Kunststoff ausgebildet sind, und daß an der Zugstange eine Reihe von zu dem Querriegel hin geneigten Rastzähnen ausgebildet ist, in die eine an dem Gegenlager ausgebildete elastische Rastzunge eingreift, wobei sich das auf den Querriegel beaufschlagte Gegenlager über die Rastzunge an einem der Rastzähne abstützt.

Um seine einfache Herstellbarkeit zu erreichen, besteht der neue Hohlraumanker in allen Teilen aus gespritztem Kunststoff. Derartige Spritzgußteile weisen bei Verwendung ausgewählter Materialien eine ausgezeichnete Stabilität auf. Gleichzeitig sind sie unanfällig gegenüber Korrosion und können leicht in verschiedene Farben eingefärbt werden. Weitere ästhetische Vorteile ergeben sich durch eine relativ große Gestaltungsfreiheit bei dem Gegenlager, welches von dem Hohlraumanker als einziges Bauteil nach der Montage von außen sichtbar ist. Die extrem schnelle Montierbarkeit des neuen Hohlraumankers wird durch die an der Zugstange ausgebildete Reihe von Rastzähnen in Verbindung mit der Rastzunge des Gegenlagers erreicht. Es reicht aus, die Zugstange mit dem in der Ankerstellung befindlichen Querriegel anzuziehen und dabei das Gegenlager in Richtung auf den Querriegel vorzudrücken. Dieses Vordrücken wird durch die Rastzähne und die Rastzunge nicht behindert. Sie verhindern aber ein Rückspringen des Gegenlagers. Vielmehr wird das Gegenlager über die Rastzunge, die sich an dem dann hinter ihr liegenden Rastzahn abstützt, in der zuletzt erreichten, vorgedrückten Stellung fixiert. Nach dem Montieren des neuen Hohlraumankers steht ein Teil der Zugstange über das Gegenlager vor. Dieser Teil kann jedoch problemlos abgekniffen, abgesägt oder abgeschnitten werden. Wenn dies bündig mit den äußeren Abmessungen des Gegenlagers erfolgt, wird ein guter ästhetischer Gesamteindruck erzielt. Bei dem neuen Hohlraumanker tritt nicht das Problem auf, daß die Zugstange vor dem Montieren gekürzt werden muß, weil der hinter der Wandlung befindliche Hohlraum nicht ausreichend tief ist, um die Zugstange bis zur ausreichenden Beaufschlagung des Gegenlagers aufzunehmen. Jegliches Übermaß der Zugstange kann vielmehr nach dem Montieren des Hohlraumankers beseitigt werden.

Eine Sicherung eines Gegenlagers über eine in eine Reihe von Rastzähnen eingreifende Rastzunge ist grundsätzlich aus dem DE-GM 295 03 342 bekannt, das ein Universal-Montageprofil zum Anklemmen beschreibt. Dort wird jedoch kein Hohlraumanker offenbart. Vielmehr weist das beschriebene Universal-Montageprofil einen zwingenartigen Aufbau auf. Darüberhinaus schließt das freie Ende der Rastzunge bei dem entsprechenden Bauteil des Universal-Montageprofils mit dessen äußeren Abmessungen ab. Wäre dies bei dem neuen Hohlraumanker der Fall, könnte die überstehende Zugstange nach der Montage des Hohlraumankers nicht bündig mit den äußeren Abmessungen des Gegenlagers abgeschnitten werden, da sonst der die Rastzunge abstützende Rastzahn wegfiele.

Bei dem neuen Hohlraumanker ist das freie Ende der Rastzunge innerhalb des Gegenlagers mit Abstand zu den äußeren Abmessungen des Gegenlagers angeordnet. Vorzugsweise entspricht der Abstand des freien Endes der Rastzunge zu den äußeren Abmessungen des Gegenlagers 0,5 bis 3, insbesondere etwa 1 bis 2 Breiten eines der Rastzähne.

Die Zugstange kann einen flach-rechteckigen, massiven Querschnitt aufweisen. Dabei können sich die Rastzähne über die gesamte Breite der Zugstange erstrecken. Bevorzugt ist aber, wenn die Rastzähne vertieft zwischen zwei seitlichen Führungsflächen angeordnet sind, so daß die Rastzähne nur über die Rastzunge mit dem entlang der Zugstange vorschieblichen Gegenlager in Berührung stehen.

Die Zugstange kann an ihrem einen Ende zwei scharnierbolzenartige Fortsätze aufweisen, die in eine komplementäre Ausnehmung in dem Querriegel eingerastet sind. Die Einrastung erfolgt vorzugsweise über eine Öffnung der Ausnehmungen an der der Zugstange in der Ankerstellung abgekehrten Seite des Querriegels.

Bei der Ausbildung der Zugstange mit den scharnierbolzenartigen Fortsätzen kann zusätzlich ein in seinen äußeren Abmessungen dem Gegenlager entsprechendes Bauteil vorgesehen sein, das ebenfalls komplementäre Ausnehmungen zu den Fortsätzen der Zugstange aufweist und das alternativ zu dem Querriegel starr auf der Zugstange befestigbar ist, die dann bündig mit den äußeren Abmessungen des Riegelteils abschließt. Auf diese Weise kann die Zugstange zusammen mit dem Riegelteil und dem Gegenlager einen Verbinder ausbilden, der nach dem Montieren und dem Entfernen des über das Gegenlager abstehenden Teils der Zugstange einen symmetrischen Aufbau der äußeren Abmessungen aufweist. Auf diese Weise stellt der Hohlraumanker gemeinsam mit dem zusätzlichen Riegelteil ein universelles Befestigungssystem zur Verfügung.

Die Zugstange kann an ihrem dem Querriegel gegenüberliegenden freien Ende einen Angriffspunkt für eine Zugvorrichtung zum Aufbringen von Zugvorspannung auf den Querriegel ausbilden. Es wurde bereits oben erläutert, daß beim Montieren des neuen Hohlraumankers die Zugstange nach dem Einführen des Querriegels in den Hohlraum anzuziehen ist. Um hierbei eine größere Vorspannkraft auf den Querriegel aufzubringen, kann dar Einsatz einer Zugvorrichtung sinnvoll sein. Hierfür ist ein spezieller Angriffspunkt für die Zugvorrichtung an der Zugstange von Vorteil.

Ein solcher Angriffspunkt kann eine randgeschlossene Durchbrechung sein, die quer durch die Zugstange verläuft. In die Durchbrechung kann beispielsweise ein Haken mit einem Zuggriff eingehakt werden.

An der Rastzunge kann ein Absatz ausgebildet sein, um mit einem dem Absatz hintergreifenden Werkzeug die Rastzunge aus der Reihe von Rastzähnen auszuheben. Mit ausgehobener Rastzunge ist es möglich, das Gegenlager gegenüber der Zugstange von dem Querriegel weg zurückzuziehen, um die Montage des Hohlraumankers zu ändern. Wenn die Zugstange bereits den äußeren Abmessungen des Gegenlagers entsprechend gekürzt wurde, ist es allerdings nur noch möglich, das Gegenlager zu entfernen, wodurch die Zugstange und der Querriegel typischerweise in dem Hohlraum verloren gehen.

Um seine Ankerstellung in dem Hohlraum zu erreichen, kann der Querriegel eine asymmetrische Masseverteilung bezüglich seiner Schwenkachse in der Zugstange aufweisen. Alternativ oder auch zusätzlich ist es möglich, eine Feder vorzusehen, die zwischen der Zugstange und dem Querriegel wirkt und diesen in der Ankerstellung beaufschlagt. Die Feder kann ebenfalls aus Kunststoff ausgebildet sein und muß kein separates Bauteil darstellen. Vielmehr ist es möglich, die Feder beispielsweise einstückig mit dem Querriegel auszubilden.

Die Erfindung wird im Folgenden anhand eines Ausführungsbeispiels näher erläutert und beschrieben. Dabei zeigen
- Figuren 1 bis 3: den neuen Hohlraumanker in eine perspektivischen Ansicht, in einem Längsschnitt durch den Querriegel und in einem dazu senkrecht verlaufenden Querschnitt durch den Querriegel, die Zugstange und das Gegenlager und
- Figuren 4 bis 6: eine perspektivische Ansicht und zwei senkrecht zueinander verlaufende Schnitte durch das alternativ zu dem Querriegel verwendbare Riegelteil.

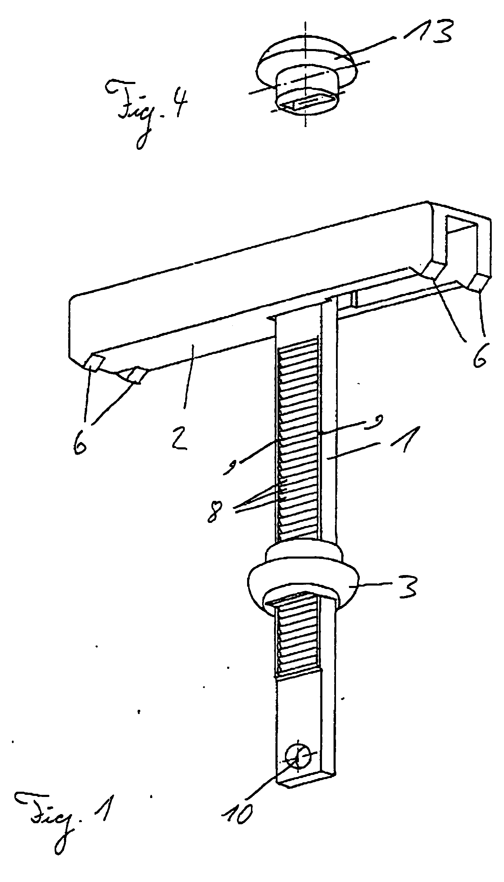

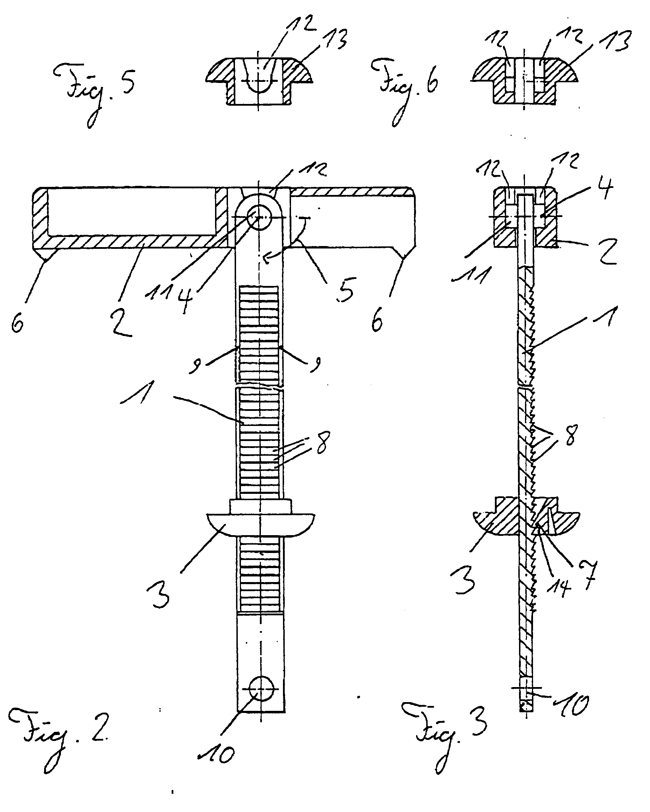

Der in den Figuren 1 bis 3 dargestellte Hohlraumanker weist eine Zugstange 1, einen Querriegel 2 und ein Gegenlager 3 auf. Der Querriegel 3 ist um eine Schwenkachse 4 verschwenkbar an dem einen Ende der Zugstange 1 gelagert. Dabei weist der Querriegel 2 zwei Schwenkstellungen gegenüber der Zugstange 1 auf. In den Figuren 1 bis 3 ist die Ankerstellung des Querriegels 2 dargestellt, in der dieser quer zu der Zugstange 1 verläuft. Daneben ist eine Einführstellung vorgesehen, in der der Querriegel 2 parallel zu der Zugstange 1 angeordnet ist. Um von der Ankerstellung in die Einführstellung zu gelangen, ist der Querriegel 2 gegenüber der Zugstange 1 in Richtung des in Figur 2 eingezeichneten Pfeils 5 um etwa 90 ° zu verschwenken. In der Einführstellung ist der Querriegel 2 mit der Zugstange 1 durch eine Bohrung in einer hier nicht dargestellten Wandung in einen hinter der Wandung befindlichen Hohlraum einführbar. In dem Hohlraum nimmt der Querriegel 2 aufgrund einer asymmetrischen Masserverteilung um die Schwenkachse 4 und der darauf einwirkenden Schwerkraft wieder die in den Figuren 1 bis 2 dargestellte Ankerstellung ein. Dann kann die Zugstange 1 angezogen werden, so daß sich der Querriegel 2 über dornartige Fortsätze 6 an die Rückseite der Wandung anlegt. Anschließend wird das Gegenlager 8 auf der Schubstange 1 in Richtung auf den Querriegel 2 verschoben, bis es an der Vorderseite der Wandung oder einem davor befindlichen Gegenstand kraftschlüssig anliegt. Diese Stellung des Gegenlagers 3 wird durch eine an dem Gegenlager 3 ausgebildete Rastzunge 7 fixiert, die in eine Reihe von Rastzähnen 8 eingreift, welche an der Zugstange 1 ausgebildet sind. Die Rastzähne 8 sind zu dem Querriegel hin geneigt und stützen die Rastzunge 7, welche auf der dem Querriegel 2 zugewandten Seite des Gegenlagers 3 federnd gelagert ist, in der entgegengesetzten Richtung ab. Nach der so erfolgten Montage des Hohlraumankers, kann die Zugstange 1 bündig mit der Rückseite des Gegenlagers 3 abgetrennt werden. Dies läßt die Fixierung des Gegenlagers 3 an der Zugstange 1 über die Rastzunge 7 unberührt, da das freie Ende der Rastzunge 7 innerhalb der äußeren Abmessungen des Gegenlagers 3 und mit Abstand zu diesen angeordnet ist. Die Rastzähne 8 sind vertieft an der Zugstange 1 zwischen seitlichen Führungsflächen 9 vorgesehen. Die Führungsflächen 9 führen das Gegenlager 3 auf der Seite der Rastzähne 8 an der Zugstange 1. Außerdem bilden die Führungsflächen 9 einen Verletzungsschutz vor den scharfen Außenkanten der Rastzähne 8. An dem freien Ende der Zugstange 1 ist eine Durchbrechung 10 als Angriffspunkt für eine Zugvorrichtung vorgesehen, um den Querriegel 2 beim Andrücken des Gegenlagers 3 unter größere Vorspannung zu setzen. Hierbei kann sich der Querriegel 2 zwischen den dornartigen Fortsätzen 6 elastisch durchbiegen. Die Lagerung des Querriegels 2 an der Zugstange 1 erfolgt über zwei scharnierbolzenartige Fortsätze 11 der Zugstange 1, die quer und einander gegenüberliegend von dieser abstehen. Die Fortsätze 11 sind in komplementäre Ausnehmungen 12 in dem Querriegel eingerastet. Die Auznehmungen 12 sind auf der dem freien Ende der Zugstange 1 abgewandten Seite des Querriegels 2 offen.

So ist es möglich, den Querriegel 2 von der Zugstange 1 wieder abzunehmen und gegen ein in den Figuren 4 bis 6 dargestelltes Riegelteil 13 austauschen. Das Riegelteil 13 weist dieselben Ausnehmungen 12 wie der Querriegel 2 auf. Angerastet an die Zugstange 1 ist es jedoch gegenüber dieser nicht verschwenkbar, sondern starr auf dieser angeordnet. Die äußeren Abmessungen des Riegelteils 13 entsprechen denjenigen des Gegenlagers 3. So ist mit dem Riegelteil 13, der Zugstange 1 und dem Gegenlager 3 eine Verbindungsvorrichtung geschaffen, die nach dem Entfernen des über das Gegenlager 3 rückwärtig überstehenden Teils der Zugstange, d. h. im fertig montierten Zustand, einen symmetrischen optische Gesamteindruck aufweist.

Um das Gegenlager 3 bei dieser Verbindungsvorrichtung aber auch bei Verwendung des Hohlraumankers mit dem Querriegel von der Zugstange 1 zu lösen, ist an der Rastzunge 7 ein Absatz 14 ausgebildet. Der Absatz 14 kann beispielsweise mit einem Schraubenzieher hintergriffen werden, um die Rastzunge 7 aus der Reihe der Rastzähne 8 auszuheben. Mit ausgehobener Rastzunge kann das Gegenlager 3 entlang der Zugstange zurückgezogen und von dieser entfernt werden.

Sowohl die Zugstange 1, der Querriegel 2, das Gegenlager 3, als auch das Riegelteil 13 sind Spritzgußteile aus Kunststoff. Dabei ist eine Glasfaserverstärkung des Kunststoffs vorteilhaft.

### Bezugszeichenliste

- 1: - Zugstange
- 2: - Querriegel
- 3: - Gegenlager
- 4: - Schwenkachse
- 5: - Pfeil
- 6: - Fortsatz
- 7: - Rastzunge
- 8: - Rastzähne
- 9: - Führungsfläche
- 10: - Durchbrechung
- 11: - Fortsatz
- 12: - Ausnehmung
- 13: - Riegelteil
- 14: - Absatz

## Patentansprüche

1. Hohlraumanker mit einem an einer Zugstange verschwenkbar gelagerten Querriegel, der in einer parallel zur Zugstange ausgerichteten Einführstellung mit der Zugstange durch eine Bohrung in einer Wandung in einen hinter der Wandung befindlichen Hohlraum einführbar ist und der in einer Ankerstellung, welche er in dem Hohlraum einnimmt, quer zu der Zugstange ausgerichtet ist und diese an der Wandung verankert, und mit einem an der Zugstange geführten Gegenlager für den Querriegel, das relative zu der Zugstange auf die Wandung und den dahinter befindlichen Querriegel beaufschlagbar ist, **dadurch gekennzeichnet**, daß die Zugstange (1), der Querriegel (2) und das Gegenlager (3) als Spritzgußteile aus Kunststoff ausgebildet sind und daß an der Zugstange 1 eine Reihe von zu dem Querriegel (2) hin geneigten Rastzähnen (8) ausgebildet ist, in die eine an dem Gegenlager (3) ausgebildete elastische Rastzunge (7) eingreift, wobei sich das auf den Querriegel (2) beaufschlagte Gegenlager (3) über die Rastzunge (7) an einem der Rastzähne (8) abstützt.

2. Hohlraumanker nach Anspruch 1, **dadurch gekennzeichnet**, daß das freie Ende der Rastzunge (7) innerhalb des Gegenlagers (3) mit Abstand zu den äußeren Abmessungen des Gegenlagers (3) angeordnet ist.

3. Hohlraumanker nach Anspruch 2, **dadurch gekennzeichnet**, daß der Abstand des freien Endes der Rastzunge (7) zu den äußeren Abmessungen des Gegenlagers 0,5 bis 3, insbesondere etwa 1 bis 2 Breiten eines der Rastzähne (8) entspricht.

4. Hohlraumanker nach einem der Ansprüche 1 bis 3, **dadurch gekennzeichnet**, daß die Zugstange (1) einen flach-rechteckigen, massiven Querschnitt aufweist.

5. Hohlraumanker nach einem der Ansprüche 1 bis 4, **dadurch gekennzeichnet,** daß die Zugstange (1) an ihrem einen Ende zwei scharnierbolzenartige Fortsätze (11) aufweist, die in komplementäre Ausnehmungen (12) in dem Querriegel (2) eingerastet sind.

6. Hohlraumanker nach Anspruch 5, **dadurch gekennzeichnet**, daß zusätzlich ein in seinen äußeren Abmessungen den Gegenlager (3) entsprechendes Riegelteil (13) vorgesehen ist, das ebenfalls komplementäre Ausnehmungen (12) zu den Fortsätzen (11) der Zugstange (1) aufweist, und daß alternativ zu dem Querriegel (2) starr auf der Zugstange (1) befestigbar ist, die dann bündig mit den äußeren Abmessungen des Riegelteils 13 abschließt.

7. Hohlraumanker nach einem der Ansprüche 1 bis 6, **dadurch gekennzeichnet**, daß die Zugstange 1 an ihrem, dem Querriegel (2) gegenüberliegenden freien Ende einen Angriffspunkt (10) für eine Zugvorrichtung zum Aufbringen von Zugvorspannung auf den Querriegel (2) ausbildet.

8. Hohlraumanker nach Anspruch 7, **dadurch gekennzeichnet**, daß der Angriffspunkt eine randgeschlossene Durchbrechung (10) ist, die quer durch die Zugstange (1) verläuft.

9. Hohlraumanker nach einem der Ansprüche 1 bis 8, **dadurch gekennzeichnet**, daß an der Rastzunge (7) ein Absatz (14) ausgebildet ist, um mit einem, den Absatz hintergreifenden Werkzeug die Rastzunge (7) aus der Reihe der Rastzähne (8) auszuheben.

10. Hohlraumanker nach einem der Ansprüche 1 bis 9, **dadurch gekennzeichnet**, daß der Querriegel (2) eine asymmetrische Masseverteilung bezüglich seiner Schwenkachse (4) an der Zugstange (1) aufweist.
